# EUROPEAN PATENT APPLICATION

(11) **EP 4 768 535 A1**
(43) Date of publication of application: **01.07.2026**
(21) Application number: 25155995.1
(22) Date of filing: 05.02.2025
(51) Int. Cl.: C08L 23/06, C08L 65/00, C08L 79/08, C08G 73/10, C08K 3/22

(54) **COMPATIBILIZED AND INTERNALLY LUBRICATED POLYOLEFIN HIGH HEAT BLENDS**

(30) Priority: 26.12.2024 US 202463738931 P
(71) Applicant: SHPP Global Technologies B.V., 4612 PX Bergen op Zoom (NL)
(72) Inventor: Jenkins, Lauri Laurene, Selkirk, 12158 (US); Ziegler, Christopher, Selkirk, 12158 (US); Sanner, Mark A., Mt. Vernon, 47620 (US); Kung, Edward, Selkirk, 12158 (US); Patil, Dadasaheb, Mt. Vernon, 47620 (US)
(74) Representative: Modiano, Gabriella Diana

(57) **Abstract**

Thermoplastic compositions include: a) from about 10 wt% to about 97 wt% of a first thermoplastic polymer component comprising polyetherimide (PEI), polyaryletherketone (PAEK), or a combination thereof; b) from about 0.1 wt% to about 10 wt% of a second chemically reactive polyetherimide (r-PEI) component that is different from the first polyetherimide component; and c) from about 2 wt% to about 10 wt% of a reactive polyolefin compatibilizer component. The combined weight percent value of all components does not exceed 100 wt%, and all weight percent values are based on the total weight of the composition. In certain aspects a molded sample of the composition has no delamination or plate-out as evaluated according to a visual observation.

## Description

### FIELD OF THE DISCLOSURE

The present disclosure relates to thermoplastic compositions including polyetherimide (PEI) and/or polyaryletherketone (PAEK), and in particular to PEI/PAEK compositions having good delamination and plate-out properties.

### BACKGROUND OF THE DISCLOSURE

The current state of the art in high heat resins includes use of polytetrafluoroethylene (PTFE) as an internal lubricant. High heat resins such as polyetherimide (PEI, e.g., Ultem^{™}) and poly (ether ether ketone) (PEEK) are difficult to compatibilize for use with polyolefin internal lubricants due to the large difference in polarity between the hydrophobic polyolefin additives and other resins which are much more polar (hydrophilic) due to their chemical structure. Ultra-high molecular weight polyethylene (UHMWPE) is a polyolefin additive of very high molecular weight and is more thermally stable than lower molecular weight polyolefins. As such, it is preferable for use with high heat performance resins as compared to lower molecular weight polyolefins. Its high melt viscosity, however, presents additional challenges when incorporating it into thermoplastic resin formulations. UHMWPE is not an extrudable polymer due to its high molecular weight and semi-crystalline structure. It does not melt into a liquid form but instead softens. It is available in surface modified and non-surface modified particles. The surface modification has been shown to help with dispersion into many thermoplastic resin bases. When UHMWPE is compounded into polar high heat resins, it tends to phase separate during molding, leading to skinning delamination. Current experiments have confirmed that use of UHMWPE additives in high heat polymers leads to delamination in molded parts (especially in thin walled parts) and severe plate-out during molding.

These and other shortcomings are addressed by aspects of the present disclosure.

### SUMMARY

Aspects of the disclosure relate to thermoplastic compositions including: a) from about 10 wt% to about 97 wt% of a first thermoplastic polymer component comprising polyetherimide (PEI), polyaryletherketone (PAEK), or a combination thereof; b) from about 0.1 wt% to about 10 wt% of a second chemically reactive polyetherimide (r-PEI) component that is different from the first polyetherimide component; and c) from about 2 wt% to about 10 wt% of a reactive polyolefin compatibilizer component. The combined weight percent value of all components does not exceed 100 wt%, and all weight percent values are based on the total weight of the composition. In certain aspects a molded sample of the composition has no delamination and/or no plate-out as evaluated according to a visual observation.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

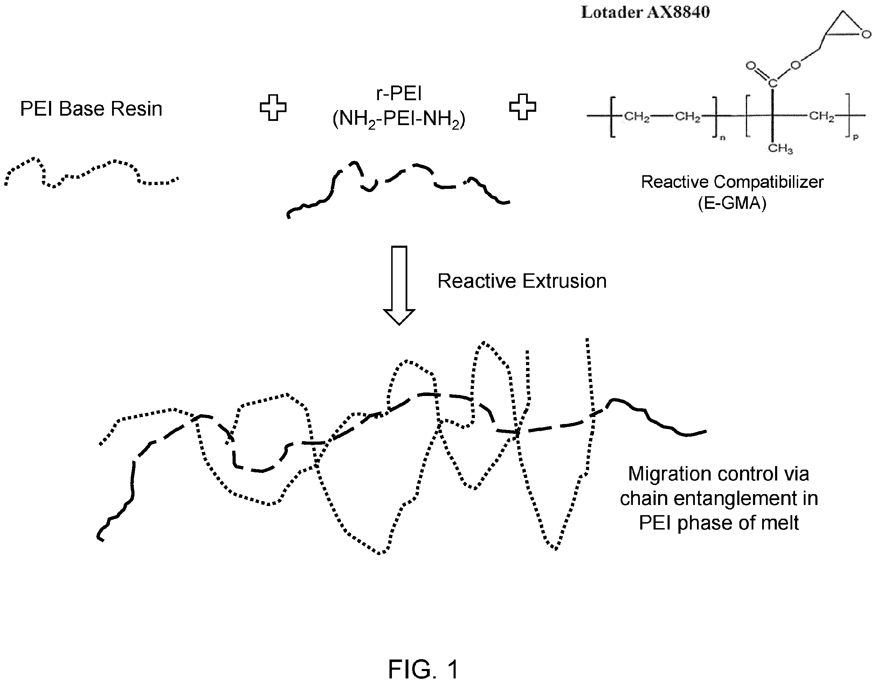

FIG. 1 is an exemplary reaction scheme for forming a composition according to aspects of the disclosure.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyetherimide" includes mixtures of two or more polyetherimide polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

FIG. 1 shows an exemplary reaction scheme for forming a composition according to aspects of the disclosure. A thermoplastic polymer such as polyetherimide (PEI, e.g., Ultem^{™} 1010) may be blended with a chemically reactive polyetherimide (r-PEI) component such as amine-terminated PEI and a reactive polyolefin compatibilizer such as an ethylene-glycidyl methacrylate (E-GMA) compatibilizer (e.g., Lotader^{®} AX8840) in a reactive extrusion process to form the composition. The r-PEI and reactive compatibilizer provide migration control to the composition via chain entanglement, preventing the olefin phase from migrating to the surface of the extruded composition during the high temperature and high shear molding process. This improves the plate-out and delamination properties of the composition, and may further result in compositions having improved (lower) wear factor and coefficient of friction properties.

Aspects of the disclosure relate to a thermoplastic composition including: a) from about 10 wt% to about 97 wt% of a first thermoplastic polymer component including polyetherimide (PEI), polyaryletherketone (PAEK), or a combination thereof; b) from about 0.1 wt% to about 10 wt% of a second chemically reactive polyetherimide (r-PEI) component that is different from the first polyetherimide component; and c) from about 2 wt% to about 10 wt% of a reactive polyolefin compatibilizer component. The combined weight percent value of all components does not exceed 100 wt%, and all weight percent values are based on the total weight of the composition.

Polyetherimide (PEI) refers to polymers containing ether and optionally substituted imide functional groups in the backbone of the polymer. The PEI may include a polyetherimide homopolymer, a polyetherimide copolymer, or a combination thereof. Exemplary PEIs are available from SABIC under the Ultem^{™}, Extern^{™}, and Siltem^{™} brands.

Polyaryletherketone (PAEK) polymers are polymers containing the unit

-Ar-O-Ar-C(=O)-

where each Ar is independently an aromatic moiety. Specific examples of PAEK polymers include poly (ether ketone) ("PEK"), poly (ether ether ketone) ("PEEK"), poly (ether ketone ketone) ("PEKK"), poly (ether ketone ether ketone ketone) ("PEKEKK"), poly (ether ether ketone ether ether ketone) ("PEEKEEK"), poly (ether diphenyl ketone) ("PEDK"), poly (ether diphenyl ether ketone) ("PEDEK"), poly (ether diphenyl ether ketone ketone) ("PEDEKK"), and poly (ether ketone ether naphthalene) ("PEKEN").

In specific aspects the PAEK includes poly (ether ether ketone) (PEEK). The PEEK may include a PEEK homopolymer, a PEEK copolymer, or a combination thereof.

In one aspect, the PEEK comprises repeat units of formula (I) 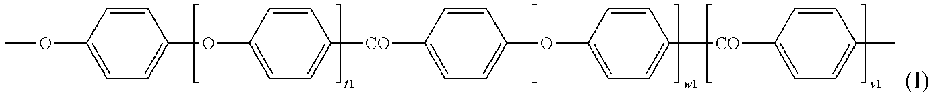 wherein t1 is 0 or 1, w1 is 0 or 1, and v1 is 0, 1, or 2. In one aspect, t1 is 1, v1 is 0, and w1 is 0. In another aspect, t1 is 0, v1 is 0, and w1 is 0. In yet another aspect, t1 is 0, w1 is 1, and v1 is 2. In yet another aspect, t1 is 0, v1 is 1, and w1 is 0. In yet another aspect, t1 is 1, v1 is 0, and w1 is 0.

In one aspect, the PEEK comprises a moiety of formula (II) 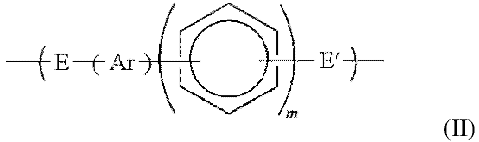 and/or a moiety of formula (III) 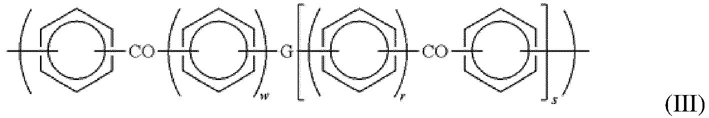 and/or a moiety of formula (IV) 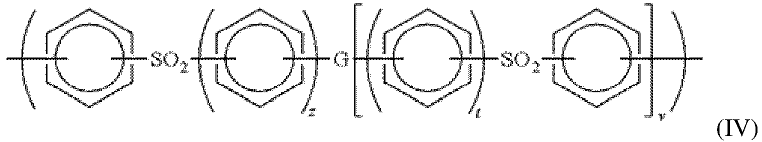 wherein m, r, s, t, v, w, and z independently represent zero or a positive integer, E and E independently represent an oxygen or a sulfur atom or a direct link, G represents an oxygen or sulfur atom, a direct link or a -O-Ph-O- moiety where Ph represents a phenyl group and Ar is selected from one of the following moieties (V) to (IX) which is bonded via one or more of its phenyl moieties to adjacent moieties

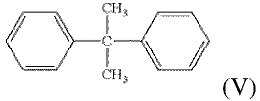

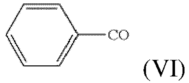

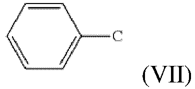

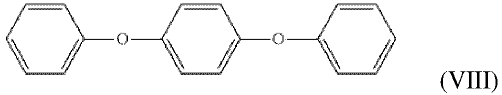

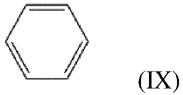

In one aspect, a phenyl moiety has 1,4-, linkages to moieties to which it is bonded.

In one aspect, (VI), the middle phenyl may be 1,4- or 1,3-substituted, for example 1,4-substituted.

Exemplary PEEKs are available from Victrex, and include PEEK 150 which is a low molecular weight/lower viscosity/high flow PEEK resin and PEEK 450 which is a high molecular weight/higher viscosity/lower flow resin. PEEK 450 has a viscosity of 350 pascal*seconds (Pa*s) at 400 °C as measured in accordance with ISO 11443. PEEK 150 has a viscosity of 130 pascal*seconds (Pa*s) at 400 °C as measured in accordance with ISO 11443.

Accordingly, in particular aspects the first thermoplastic polymer component includes a polyaryletherketone (PAEK), such as PEEK, that is a low viscosity polymer. Lower viscosity polymers, such as PEEK 150 or some PEEK 450/150 blends, flow more easily in the melt resulting in less chain entanglement (higher free volume in the melt), which can cause the polyolefin component (phase) to move out to the surface more readily resulting in plate-out and/or formation of a high polyolefin composition at the surface that leads to delamination.

In some aspects the low viscosity polymer has a viscosity, as measured in accordance with ISO 11443 at 400 °C, of less than 350 Pa*s. In further aspects the low viscosity polymer has a viscosity, as measured in accordance with ISO 11443 at 400 °C, of less than 340 Pa*s, or less than 330 Pa*s, or less than 320 Pa*s, or less than 310 Pa*s, or less than 300 Pa*s, or less than 290 Pa*s, or less than 280 Pa*s, or less than 270 Pa*s, or less than 260 Pa*s, or less than 250 Pa*s, or less than 240 Pa*s, or less than 230 Pa*s, or less than 220 Pa*s, or less than 210 Pa*s, or less than 200 Pa*s, or less than 190 Pa*s, or less than 180 Pa*s, or less than 170 Pa*s, or less than 160 Pa*s, or less than 150 Pa*s, or less than 140 Pa*s. If the composition includes a blend of high viscosity and low viscosity polymers (e.g., a high viscosity PEEK and a low viscosity PEEK), then the combined viscosity of the blend of polymers may be less than the values recited herein.

Compositions according to aspects of the disclosure include from about 10 wt% to about 97 wt% of a first thermoplastic polymer component including polyetherimide (PEI), poly (ether ether ketone) (PEEK), or a combination thereof. In some aspects the composition includes at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at least 65 wt%, or at least 70 wt%, or at least 75 wt%, or at least 80 wt%, or at least 85 wt%, or at least 90 wt%, or at most 97 wt%, or at most 95 wt%, or at most 90 wt%, or at most 85 wt%, or at most 80 wt%, or at most 75 wt%, or at most 70 wt%, or at most 65 wt%, or at most 60 wt%, of the first thermoplastic polymer component.

The composition includes from about 0.1 wt% to about 10 wt% of a second chemically reactive polyetherimide (r-PEI) component. In some aspects the r-PEI component includes a polyetherimide backbone end-capped with a reactive group that reacts with an end group of the reactive polyolefin compatibilizer component. Exemplary reactive groups that react with an end group of the reactive polyolefin compatibilizer component include, but are not limited to, amines, anhydrides, imides, benzenes, alcohols, carboxylic acids, epoxies, glycidyl ethers, thiols, silanes, aldehydes, aromatic acids, or combinations thereof. In a particular aspect, the r-PEI component includes an amine reactive group. The r-PEI may be an oligomer or a polymer. Exemplary r-PEIs include amine-terminated r-PEI polymer and r-PEI oligomer, available from SABIC.

In certain aspects the composition includes at least 0.1 wt%, or at least 0.3 wt%, or at least 0.5 wt%, or at least 0.7 wt%, or at least 0.9 wt%, or at least 1 wt%, or at least 1.5 wt%, or at least 2 wt%, or at least 2.5 wt%, or at least 3 wt%, or at least 3.5 wt%, or at least 4 wt%, or at least 4.5 wt%, or at least 5 wt%, or at least 5.5 wt%, or at least 6 wt%, or at least 6.5 wt%, or at least 7 wt%, or at most 10 wt%, or at most 9.5 wt%, or at most 9 wt%, or at most 8.5 wt%, or at most 8 wt%, or at most 7.5 wt%, or at most 7 wt%, or at most 6.5 wt%, or at most 6 wt%, or at most 5.5 wt%, or at most 5 wt%, or at most 4.5 wt%, or at most 4 wt%, or at most 3.5 wt%, or at most 3 wt%, or at most 2.5 wt%, or at most 2 wt%, or at most 1.5 wt%, of the r-PEI component.

Compositions according to aspects of the disclosure include from about 2 wt% to about 10 wt% of a reactive polyolefin compatibilizer component. In some aspects the reactive polyolefin compatibilizer component is functionalized with a reactive group or includes a surface treatment. Exemplary reactive polyolefin compatibilizer components are described in European patent no. EP0691380B1, the disclosure of which is incorporated herein by this reference in its entirety.

In certain aspects the reactive group includes glycidyl ether, maleic anhydride, or a combination thereof. In further aspects the reactive polyolefin compatibilizer component includes a surface treatment and includes high density polyethylene (HDPE), low density polyethylene (LDPE), linear low density polyethylene (LLDPE), or a combination thereof.

Exemplary reactive polyolefin compatibilizer components include, but are not limited to: a maleic anhydride grafted high-density polyethylene (HDPE-MAH) compatibilizer available from SK Functional Polymers as Orevac^{®} 18507; an ethylene-glycidyl methacrylate (E-GMA) compatibilizer available from SK Functional Polymers as Lotader^{®} AX8840; and an ethylene-glycidyl methacrylate (E-GMA) co-polymer compatibilizer available from Sumitomo as one of several Igetabond^{™} grades. The compositions may further include combinations of one or more reactive polyolefin compatibilizer components including those described herein.

In certain aspects the composition includes at least 2 wt%, or at least 2.5 wt%, or at least 3 wt%, or at least 3.5 wt%, or at least 4 wt%, or at least 4.5 wt%, or at least 5 wt%, or at least 5.5 wt%, or at least 6 wt%, or at least 6.5 wt%, or at least 7 wt%, or at most 10 wt%, or at most 9.5 wt%, or at most 9 wt%, or at most 8.5 wt%, or at most 8 wt%, or at most 7.5 wt%, or at most 7 wt%, or at most 6.5 wt%, or at most 6 wt%, or at most 5.5 wt%, or at most 5 wt%, or at most 4.5 wt%, or at most 4 wt%, or at most 3.5 wt%, or at most 3 wt%, or at most 2.5 wt%, of the reactive polyolefin compatibilizer component.

In some aspects the composition includes from greater than 0 wt% to 40 wt% glass fiber. The glass fiber can be surface-treated with a surface treatment agent containing a coupling agent. Appropriate coupling agents can include, but are not limited to, silane-based coupling agents, titanate -based coupling agents or a mixture thereof. Suitable silane-based coupling agents can include aminosilane, epoxysilane, amidesilane, azidesilane and acrylsilane. In one aspect, the glass fiber is selected from E-glass, S-glass, AR-glass, T-glass, D-glass and R-glass. In a still further aspect, the glass fiber is selected from E-glass, S-glass, and combinations thereof. In a still further aspect, the glass fiber is one or more S-glass materials. The glass fibers can be made by standard processes, e.g., by steam or air blowing, flame blowing, and mechanical pulling. Exemplary glass fibers for thermoplastic compositions of the present disclosure may be made by mechanical pulling.

The glass fibers may be sized or unsized. Sized glass fibers are coated on their surfaces with a sizing composition selected for compatibility with the polymeric base resin (e.g., the PEI or PEEK described herein). The sizing composition facilitates wet-out and wet-through of the polymeric base resin upon the fiber strands and assists in attaining desired physical properties in the thermoplastic composition.

In various further aspects, the glass fiber has a round (or circular), flat, or irregular cross-section. Thus, use of non-round fiber cross sections is possible. In a still further aspect, the glass fiber has a circular cross-section. In yet further aspect, the diameter of the glass fiber is from 1 micrometer (micron, µm) to 15 µm, including 2 µm, 3 µm, 4 µm, 5 µm, 6 µm, 7 µm, 8 µm, 9 µm, 10 µm, 11 µm, 12 µm, 13 µm, 14 µm, and 15 µm.

As discussed, glass fiber having a flat cross-section may be used. A flat glass fiber may have an aspect ratio for the flat cross-section of from about 2 to about 5. For example, the flat cross-section glass may have an aspect ratio of 4:1.

One purely exemplary glass fiber suitable for use in compositions according to aspects of the disclosure is available from Owens Corning under the trade name 910A, which is an 11 µm chopped glass fiber. Another is available from Johns Manville under the ThermoFlow^{®} 770 trade name.

The composition includes from greater than 0 wt% to 40 wt% glass fiber in some aspects. In further aspects the composition includes at least 1 wt%, or at least 5 wt%, or at least 10 wt%, or at least 15 wt%, or at least 20 wt%, or at least 25 wt%, or at least 30 wt%, or at most 40 wt%, or at most 35 wt%, or at most 30 wt%, or at most 25 wt%, or at most 20 wt%, or at most 15 wt%, of the glass fiber.

In further aspects the composition includes from about 0.1 wt% to about 15 wt% of a mineral filler, a non-reactive polyolefin component, or a combination thereof. Exemplary mineral fillers include, but are not limited to, titanium dioxide (TiO₂), mica, talc, calcium carbonate, dolomite, wollastonite, barium sulfate, silica, kaolin, feldspar, barite, or combinations thereof. The non-reactive polyolefin component may include non-reactive high density polyethylene (HDPE).

In certain aspects the composition includes at least 0.1 wt%, or at least 0.2 wt%, or at least 0.3 wt%, or at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, of the mineral filler, non-reactive polyolefin component, or combination thereof.

In some aspects the composition includes at least one additional additive. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

In particular aspects the composition includes from 0.01 wt% to about 10 wt%, or at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1 wt%, or at least 2 wt%, or at least 3 wt%, or at least 4 wt%, or at least 5 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, or at most 0.9 wt%, or at most 0.8 wt%, or at most 0.7 wt%, or at most 0.6 wt%, or at most 0.5 wt%, or at most 0.4 wt%, or at most 0.3 wt%, or at most 0.2 wt%, or at most 0.1 wt%, of the at least one additional additive.

In certain aspects the composition does not include polytetrafluoroethylene.

In further aspects the composition does not include ultra-high molecular weight polyethylene.

As used herein "does not include" or "does not comprise" means that the composition includes less than 1 wt%, or less than 0.1 wt%, or less than 0.01 wt%, or less than 0.001 wt%, or 0 wt%, of the indicated component. In further aspects "does not include" or "does not comprise" means that the indicated component is not intentionally added to the composition.

Compositions according to aspects of the disclosure have good delamination and plate-out properties. Methods for evaluating these properties are described in the Examples. In some aspects a molded sample of the composition has no delamination or plate-out as evaluated according to a visual observation.

In further aspects the composition has a lower wear factor or coefficient of friction as compared to a comparative composition that does not include the r-PEI component and/or the reactive polyolefin compatibilizer component. In certain aspects lower wear factor or coefficient of friction includes at least 5% lower, or at least 10% lower, or at least 15% lower, or at least 20% lower, or at least 25% lower, or at least 30% lower, or at least 35% lower, or at least 40% lower, or at least 45% lower, or at least 50% lower.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In specific aspects the article is a molded part, extruded article, or film. In a further aspect the article is a molded part having a thickness of 3 mm or less, or 2.5 mm or less, or 2 mm or less, or 1.5 mm or less.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a) from about 10 wt% to about 97 wt% of a first thermoplastic polymer component comprising polyetherimide (PEI), polyaryletherketone (PAEK), or a combination thereof;
b) from about 0.1 wt% to about 10 wt% of a second chemically reactive polyetherimide (r-PEI) component that is different from the first polyetherimide component; and
c) from about 2 wt% to about 10 wt% of a reactive polyolefin compatibilizer component,
wherein the combined weight percent value of all components does not exceed 100 wt%, and all weight percent values are based on the total weight of the composition.

Aspect 2. The thermoplastic composition according to Aspect 1, wherein the first thermoplastic polymer component comprises polyetherimide copolymer.

Aspect 3. The thermoplastic composition according to Aspect 1 or 2, wherein the r-PEI component comprises a polyetherimide backbone end-capped with a reactive group that reacts with an end group of the reactive polyolefin compatibilizer component.

Aspect 4. The thermoplastic composition according to Aspect 3, wherein the reactive group that reacts with an end group of the reactive polyolefin compatibilizer component comprises, but is not limited to, an amine, an anhydride, an imide, a benzene, an alcohol, a carboxylic acid, an epoxy, a glycidyl ether, a thiol, a silane, an aldehyde, an aromatic acid, or a combination thereof.

Aspect 5. The thermoplastic composition according to Aspect 3 or 4, wherein the r-PEI component comprises an amine reactive group.

Aspect 6. The thermoplastic composition according to any one of Aspects 1 to 5, wherein the composition comprises from about 2 wt% to about 5 wt% of the r-PEI component.

Aspect 7. The thermoplastic composition according to any one of Aspects 1 to 6, wherein the reactive polyolefin compatibilizer component is functionalized with a reactive group or comprises a surface treatment.

Aspect 8. The thermoplastic composition according to Aspect 7, wherein the reactive group comprises glycidyl ether, maleic anhydride, or a combination thereof.

Aspect 9. The thermoplastic composition according to Aspect 7 or 8, wherein the reactive polyolefin compatibilizer component comprises a surface treatment and comprises high density polyethylene (HDPE), low density polyethylene (LDPE), linear low density polyethylene (LLDPE), or a combination thereof.

Aspect 10. The thermoplastic composition according to any one of Aspects 1 to 9, wherein the polyaryletherketone (PAEK) comprises poly (ether ether ketone) (PEEK).

Aspect 11. The thermoplastic composition according to any one of Aspects 1 to 10, wherein a molded sample of the composition has no delamination or plate-out as evaluated according to a visual observation.

Aspect 12. The thermoplastic composition according to any one of Aspects 1 to 11, wherein the composition further comprises from greater than 0 wt% to 40 wt% glass fiber.

Aspect 13. The thermoplastic composition according to any one of Aspects 1 to 12, wherein the composition further comprises from about 0.1 wt% to about 15 wt% of a mineral filler, a non-reactive polyolefin component, or a combination thereof.

Aspect 14. The thermoplastic composition according to Aspect 13, wherein the mineral filler comprises TiO₂, mica, talc, or a combination thereof.

Aspect 15. The thermoplastic composition according to Aspect 13 or 14, wherein the non-reactive polyolefin component comprises non-reactive high density polyethylene.

Aspect 16. The thermoplastic composition according to any one of Aspects 1 to 15, wherein the composition comprises at least one additional additive.

Aspect 17. The thermoplastic composition according to Aspect 16, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

Aspect 18. The thermoplastic composition according to any one of Aspects 1 to 17, wherein the composition does not comprise polytetrafluoroethylene.

Aspect 19. The thermoplastic composition according to any one of Aspects 1 to 18, wherein the composition does not comprise ultra-high molecular weight polyethylene.

Aspect 20. An article comprising the thermoplastic composition according to any one of Aspects 1 to 19.

Aspect 21. The article according to Aspect 20, wherein the article is a molded part, an extruded article, or a film.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Example 1 - Comparative Compositions including UHMWPE

Ultra-high molecular weight polyethylene provides good wear and friction performance in polymer blends. Unfortunately, as discussed in the Background section above, it has a high melt viscosity that presents challenges when it is incorporated into thermoplastic resin formulations. When UHMWPE is compounded into polar high heat resins such as polyetherimide (PEI, e.g., Ultem^{™}), it tends to phase separate during molding, leading to skinning delamination. Current experiments have confirmed that use of UHMWPE additives in high heat polymers leads to delamination in molded parts (especially in thin walled parts) and severe plate-out during molding.

In particular, various resin compositions including Ultem^{™} 1000 resin from SABIC were blended with UHMWPE with a compatibilizer The compositions were injection molded into UL flame bar samples having a thickness of 1.5 mm, and their delamination properties were observed. Delamination was tested by bending the 1.5 mm flame bar back and forth for 20 bend cycles. Any separation of the surface was deemed a failure. Plate-out was tested by observing the mold face through 50 molding part cycles. If no build-up was seen on the molding plates, the formulation passed. The compositions and the results are shown in Tables 1A and 1B:

**Table 1A - Comparative Compositions including UHMWPE**

| **Component** | **C1** | **C2** | **C3** | **C4** | **C5** | **C6** | **C7** |
|---|---|---|---|---|---|---|---|
| Ultem^{™} 1000 PEI, SABIC | 96 | 78 | 80 | 86 | 94 | 93 | 91 |
| UHMWPE, Shamrock UMFI 30X | 4 | 4 | 4 | 4 | 4 | 4 | 4 |
| Polybond^{™} 3009 compatibilizer, SI Group | | 18 | 16 | 10 | | | |
| Functionalized polyolefin compatibilizer, SABIC | | | | | 2 | 3 | 5 |
| **Total (wt%)** | 100 | 100 | 100 | 100 | 100 | 100 | 100 |

**Table 1B - Delamination Results for Table 1A Compositions**

| **Composition** | **Delamination Property** |
|---|---|
| C1 | Obvious skinning with separation |
| C2 | Improved delamination; some surface cracking |
| C3 | Improved delamination over C2; light surface defects |
| C4 | Obvious skinning w/separation; improved over C1 |
| C5 | Obvious skinning w/separation |
| C6 | Obvious skinning w/separation |
| C7 | Embrittlement and sample failure |

From the results in Table 1B it is concluded that polymer compositions including conventional PEI and UHMWPE are not suitable for injection molding applications, and in particular molding of thin-walled (e.g., thickness of 1.5 millimeters (mm) or less) parts.

### Example 2 - PEI-Based Compositions

Compositions described herein included one or more of the components recited in Table 2:

**Table 2 - Components**

| Component | Description | Source |
|---|---|---|
| PEI | Ultem^{™} 1010 polyetherimide homopolymer | SABIC |
| R-PEI (polymer) | Reactive polyetherimide polymer, amine-terminated PEI (SU3700) | SABIC |
| R-PEI (oligomer) | Reactive polyetherimide oligomer, amine-terminated PEI | SABIC |
| UHMWPE(M) | Modified ultra-high molecular weight polyethylene, UMFI 30X | Shamrock |
| UHMWPE | Conventional ultra-high molecular weight polyethylene, Inhance 1250 | Inhance |
| HDPE-MAH | Maleic anhydride grafted high-density polyethylene, Orevac^{®} 18507, compatibilizer | SK Functional Polymers |
| AX8840 | Lotader^{®} AX8840 ethylene-glycidyl methacrylate (E-GMA), compatibilizer | SK Functional Polymers |
| Igetabond^{™} | Ethylene-glycidyl methacrylate (E-GMA) co-polymer, BONF-E (Bondfast E), compatibilizer | Sumitomo |
| GF | Glass fiber, 910A, 11 µm | Owens Corning |

Various properties of the compositions were evaluated as shown in the tables. Melt mass-flow rate was evaluated according to ASTM D1238 according to a Global Test Method at a temperature of 365 °C, a 5 kilogram (kg) load and a time of 375 seconds. Delamination bend testing was performed on 125 mm and 1.5 mm thick flame bars prepared according to the UL94 flammability standard. Delamination was evaluated using according to an internal method which involved bending the bars back and forth 20 times and visually observing the presence of delamination. Mold plate-out is tested by running 50 shots of a part and visually observing the appearance of residue on the mold plate. Risk priority number (RPN) is an ordinal measure of propensity of a material pair to create noise when sliding against each other under a specified range of velocity and normal force. This method and the corresponding measurement instrument were developed by Ziegler Instruments GmbH. The Ziegler SSP-04 test bench was used to measure the RPN, Static Coefficient of Friction (CoF) and Dynamic CoF for designated materials pairings. The velocities used were 1, 5, 10 and 20 millimeters per second. The forces used were 5, 10, 20, 30 and 40 Newtons. The test protocol starts at the lowest force setting, measuring each velocity at this force then proceeds to the next force and repeats at each velocity. Each force/velocity measurement is done in triplicate. Three separate samples are tested for each materials pairing. The data is reported as the overall average for the entire testing range across the three samples.

Flexural properties (flexural modulus FM and flexural stress FS at break) were evaluated according to ASTM D790 using a 3-point flexural test with a 3.2 millimeter (mm) sample at 1.27 mm/minute (mm/min). Heat deflection temperature (HDT) was evaluated according to ASTM D648 with a 3.2 mm sample with a load of 1.82 megapascals (MPa). Notched Izod Impact strength (NII) and NII ductility were evaluated according to ASTM D256 and ASTM D4812 at 23 °C and an energy of 1 joule (1 J). Tensile properties (tensile modulus TM of elasticity, tensile stress TS at yield, TS at break, tensile elongation (TE) at yield, and TE at break) were evaluated according to ASTM D638 with an extensometer and a uniaxial tensile test at a temperature of 23 °C and a speed of 5 mm/min.

Wear factor (K) was evaluated on the sample and/or the steel counterface of the sample according to ASTM D3702 using a standard wear tester against steel at a pressure of 40 pounds per square inch (PSI), a surface velocity of 50 feet per minute (FPM) and a temperature of 25 °C.

Example and comparative compositions were prepared and tested; results are shown in Table 3:

**Table 3 - Example and Comparative Compositions**

| **Component** | **Ex1** | **Ex2** | **C1** | **C2** | **C3** |
|---|---|---|---|---|---|
| PEI | 94 | 94 | 87 | 87 | 87 |
| UHMWPE(M) | | | 3 | 3 | |
| R-PEI (polymer) | 3 | 3 | 5 | 5 | 5 |
| AX8840 | 3 | | 5 | | |
| HDPE-MAH | | 3 | | 5 | 5 |
| UHMWPE | | | | | 3 |
| **Total (wt%)** | **100** | **100** | **100** | **100** | **100** |
| | | | | | |

| **Properties** | | | | | |
|---|---|---|---|---|---|
| MFR (365 °C, 5 kg, 375 s), g/10 min | 35.9 | 42 | 27.1 | 39.8 | 37.1 |
| Delamination | Pass | Fail-LD | Fail-VLD | Fail | Fail |
| Plate out | None | None | PO | PO | PO |
| RPN | 1 | | | | |
| CoF (static) | 0.17 | | | | |
| CoF (dynamic) | 0.15 | | | | |

| | | | | | |
|---|---|---|---|---|---|
| PO=Plate-out observed; LD=Light delamination; VLD=Very light delamination | | | | | |

From the results it was observed that the comparative compositions including UHMWPE failed delamination testing. Example composition Ex1 including AX8840 had improved delamination performance as compared to Ex2 including HDPE-MAH.

Further compositions based on Ex1 were prepared with varying reactive-PEI and compatibilizer contents. A conventional HDPE was also included in the indicated compositions. Compositions and their properties are shown in Table 4:

**Table 4 - Example Compositions**

| **Component** | **Ex3** | **Ex4** | **Ex5** | **Ex6** | **Ex7** |
|---|---|---|---|---|---|
| PEI | 93 | 94 | 93 | 93 | 92.7 |
| R-PEI (polymer) | 2 | 2 | | 1 | 1 |
| R-PEI (oligomer) | | | 2 | 1 | 1 |
| Igetabond^{™} | 3 | 3 | 3 | 3 | 3 |
| TiO₂ | | | | | 0.3 |
| HDPE | 2 | 1 | 2 | 2 | 2 |
| **Total (wt%)** | 100 | 100 | 100 | 100 | 100 |
| | | | | | |

| **Properties** | | | | | |
|---|---|---|---|---|---|
| FM, MPa | 3010 | 3030 | 2990 | 3000 | 2950 |
| FS at break, 5% strain, MPa | 128 | 131 | 128 | 128 | 127 |
| HDT, °C | 186 | 191 | 188 | 190 | 188 |
| NII ductility, % | 0 | 0 | 0 | 0 | 0 |
| NII strength, J/m | 57.5 | 64.7 | 63.7 | 68.5 | 70.2 |
| TM elasticity, MPa | 2954 | 2886 | 2722 | 2726 | 2718 |
| TS at yield, MPa | 101 | 104 | 101 | 102 | 101 |
| TS at break, MPa | 79.3 | 84.2 | 81.2 | 80.4 | 80.5 |
| TE at yield, % | 6.6 | 6.7 | 6.7 | 6.7 | 6.7 |
| TE at break, % | 14 | 22 | 43 | 43 | 30 |
| Delamination | Passed | Passed | Passed | Passed | Passed |
| Plate-out | None | None | None | None | None |
| Wear factor (K) | 589 | 2431 | 389 | 613 | 545 |
| CoF (static) | 0.35 | 0.47 | 0.29 | 0.29 | 0.33 |
| CoF (dynamic) | 0.33 | 0.35 | 0.27 | 0.27 | 0.32 |

All compositions of the Table 4 passed the delamination testing. No plate-out was observed during the molding of the Table 4 compositions. Comparing Ex3 to Ex4, it was observed that an increase of only 1 wt% HDPE resulted in a decrease in wear factor (K) of over 4 times (-4.1). A significant difference in wear factor was not observed with the inclusion of R-PEI polymer vs. R-PEI oligomer.

Further comparative and example compositions were prepared and evaluated as shown in Table 5:

**Table 5 - Example and Comparative Compositions**

| **Component** | C4 | **Ex8** | **Ex9** | **C5** |
|---|---|---|---|---|
| PEI | 92 | 88 | 85 | 86 |
| R-PEI (polymer) | | 4 | 4 | 4 |
| Igetabond^{™} | 4 | 4 | 4 | 4 |
| TiO₂ | | | 3 | |
| HDPE | 4 | 4 | 4 | 6 |
| Total (wt%) | 100 | 100 | 100 | 100 |
| | | | | |

| **Properties** | | | | |
|---|---|---|---|---|
| Delamination | Passed | Passed | Passed | Failed |
| Plate-Out | None | None | None | Plate-out observed |

From the results it was observed that example compositions Ex8 and Ex9 including 4 wt% HDPE had good delamination properties and good molding appearance. Comparative composition C5 including 6 wt% HDPE failed the delamination evaluation, which suggests an upper limit for HDPE of less than 6 wt%. Accordingly, in some aspects the composition may include from 2 wt% to less than 6 wt% HDPE, or in further aspects from 3-4 wt% HDPE.

Additional compositions including glass fiber were prepared at tested; results are shown in Table 6:

**Table 6 - Glass-Filled Example Compositions**

| **Component** | **Ex10** | **Ex11** | **Ex12** | **Ex13** | **Ex14** | **Ex15** |
|---|---|---|---|---|---|---|
| PEI | 64 | 60 | 65 | 64 | 60 | 65 |
| R-PEI (polymer) | 3 | 5 | 3 | | | |
| R-PEI (oligomer) | | | | 3 | 5 | 3 |
| AX8840 | 3 | 5 | 2 | 3 | 5 | 2 |
| GF | 30 | 30 | 30 | 30 | 30 | 30 |
| **Total (wt%)** | 100 | 100 | 100 | 100 | 100 | 100 |
| | | | | | | |

| **Property** | | | | | | |
|---|---|---|---|---|---|---|
| K (sample) | 140 | 95 | 73 | 127 | 84 | 70 |
| K (counterface) | 9.2 | 5.0 | 3.0 | 11.0 | 3.6 | 2.7 |
| CoF (static) | 0.70 | 0.66 | 0.58 | 0.62 | 0.59 | 0.58 |
| CoF (dynamic) | 0.48 | 0.46 | 0.42 | 0.42 | 0.43 | 0.43 |
| Plate-out | None | None | None | None | None | None |

Delamination cannot be tested on glass-filled samples because when glass-filled samples are bent they break. Accordingly, only plate-out was observed. Plate-out was observed during the standard molding process instead of the 50-shot process described above.

Further glass-filled compositions were prepared and tested; results are shown in Table 7:

**Table 7 - Example and Comparative Compositions**

| **Component** | **Ex16** | **Ex17** | **Ex18** | **C6** | **C7** |
|---|---|---|---|---|---|
| PEI | 60 | 58 | 58 | 70 | 65 |
| R-PEI (polymer) | 5 | 7 | 5 | | |
| R-PEI (oligomer) | | | | | 5 |
| GF | 30 | 30 | 30 | 30 | 30 |
| AX8840 | 5 | 5 | 7 | | |
| **Total (wt%)** | 100 | 100 | 100 | 100 | 100 |
| | | | | | |

| **Property** | | | | | |
|---|---|---|---|---|---|
| MFR (365 °C, 5 kg, 375 s), g/10 min | 4.10 | 3.58 | 1.75 | 21.2 | 32.10 |
| FM, MPa | 8540 | 8410 | 8130 | 9300 | 9200 |
| FS at break, MPa | 215 | 212 | 194 | 270 | 260 |
| HDT, °C | 208 | 208 | 209 | 210 | 208 |
| NII strength, J/m | 78 | 77 | 73 | 87 | 81 |
| TM elasticity, MPa | 9686 | 9826 | 9512 | 10720 | 11080 |
| TS at break, MPa | 151 | 151 | 136 | 190 | 180 |
| TE at break, % | 2.40 | 2.30 | 2.00 | 2.90 | 2.50 |
| K (sample) | 113 | 93 | 126 | 107 | N/A |
| K (counterface) | 6 | 5.5 | 8 | 2 | N/A |
| CoF (static) | 0.59 | 0.55 | 0.63 | 0.66 | N/A |
| CoF (dynamic) | 0.43 | 0.39 | 0.42 | 0.45 | N/A |
| Plate-out | None | None | None | None | None |

None of the compositions had observed plate-out during their standard molding process. The wear factor and coefficient of friction results in the Table 6 and Table 7 compositions are similar. From the results in Table 7 it is observed that use of the ethylene-glycidyl methacrylate (E-GMA) compatibilizer (e.g., Lotader^{®} AX8840) results in a large decrease in melt flow rate (MFR). Accordingly, its loading should be minimized where a high MFR property is desired.

Based on the results in Tables 6 and 7, additional compositions including high density polyethylene (HDPE) were prepared to evaluate whether delamination performance could be maintained with a lower E-GMA compatibilizer content. The compositions are shown in Table 8:

**Table 8 - Example Compositions**

| **Component** | **Ex19** | **Ex20** | **Ex21** |
|---|---|---|---|
| PEI | 65 | 63 | 63 |
| R-PEI (polymer) | 3 | 3 | 3 |
| HDPE | | 2 | 2 |
| GF | 30 | 30 | 30 |
| AX8840 | 2 | 2 | |
| Igetabond^{™} | | | 2 |
| **Total (wt%)** | 100 | 100 | 100 |
| | | | |

| **Property** | | | |
|---|---|---|---|
| MFR (365 °C, 5 kg, 375 s), g/10 min | 17.0 | 12.9 | 11.0 |
| FM, MPa | 8960 | 8380 | 8880 |
| FS at break, MPa | 228 | 185 | 210 |
| HDT, °C | 211 | 211 | 210 |
| NII strength, J/m | 81 | 69 | 70 |
| TM elasticity, MPa | 9390 | 9212 | 9234 |
| TS at break, MPa | 164 | 118 | 143 |
| TE at break, % | 2.2 | 1.6 | 2.1 |
| K (sample) | 126 | 105 | 74 |
| K (counterface) | 8 | 5 | 2 |
| CoF (static) | 0.57 | 0.61 | 0.54 |
| CoF (dynamic) | 0.42 | 0.43 | 0.39 |
| Plate-out | None | None | None |

None of the compositions had observed plate-out during standard molding. From the results it is observed that HDPE may be added to the example compositions without adversely affecting plate-out performance. A difference in performance was not observed with different E-GMA compatibilizers; compare Ex19 and Ex20 including AX8840 with Ex21 including Igetabond^{™}.

Additionally, comparing Ex19, Ex20, and Ex 21 it is seen that increasing HDPE concentration decreased the wear of both the sample and the counterface. This set of formulations also shows that Igetabond^{™} further improves the wear of both the sample and the counterface. Comparing Ex19-Ex21 in Table 8 to Ex16 and Ex17 in Table 7, it is seen that minimizing the compatibilizer content (e.g., AX8840) results in an increased melt flow rate (MFR), which improves the ultimate processability and commercial viability of the resin.

Overall, these results tend to indicate that, in glass-filled ULTEM^{™}, the r-PEI helps compatibilize the HDPE in the base resin which, in-turn, controls the mobility of the HDPE to the surface during molding and disperses the HDPE in such a way as to ensure an optimal concentration at the wear surface. Addition of a PE-glycidyl ether compatibilizer (AX8840) provides a synergistic effect of this process, further enhancing the phase morphology uniformity and distribution of the HDPE in the molded part. Scanning Electron Microscopy (SEM) imaging of the formulations shown in Table 8 may be applied to evaluate the phase size and distribution of the olefin phase in the base PEI phase between the different formulations. This could provide insight into how the compatibilizers and r-PEI polymer interact with the HDPE in the molded parts.

### Example 3 - PEEK-Based Compositions

Additional comparative and example compositions have been developed for PEEK base resin formulations using the r-PEI reactive compatibilizer. The compositions included 15 wt% glass fiber. The compositions are formulated without intentional addition of polytetrafluoroethylene (PTFE) as possible replacements for conventional compositions which include 5 wt% PTFE as an internal lubricant. The compositions and their properties are shown in Table 9:

**Table 9 - PEEK-Based Compositions**

| **Component** | **C8** | **C9** | **C10** | **C11** | **C12** | **Ex22** | **Ex23** |
|---|---|---|---|---|---|---|---|
| Victrex PEEK 450 | 39.99 | 96.00 | 39.99 | 38.99 | 37.99 | 39.99 | 38.99 |
| Victrex PEEK 150°° | 40 | | 40 | 40 | 40 | 40 | 40 |
| Glass Fiber (Johns Manville, ThermoFlow^{®} 770) | 15 | | 15 | 15 | 15 | 15 | 15 |
| Calcium Stearate | 0.01 | | 0.01 | 0.01 | 0.01 | 0.01 | 0.01 |
| PTFE, Fluon^{™} ZFL1650Z | 5 | | | | | | |
| HDPE, Formolene^{™} DLH5420P | | | | | | | 1 |
| r-PEI (polymer) | | | | | | 2 | 2 |
| Igetabond^{™} | | | | | | 3 | 3 |
| UHMWPE Shamrock UMFI 30X | | 4 | 5 | 6 | 7 | | |
| **Total (wt%)** | 100 | 100 | 100 | 100 | 100 | 100 | 100 |
| | | | | | | | |

| **Property** | | | | | | | |
|---|---|---|---|---|---|---|---|
| Plate-out | Passed | Passed | Fail | Fail | Fail | Passed | Passed |
| Delamination | None | None | PO observed | PO observed | PO observed | None | None |
| K (sample) | 85 | 21 | NM | NM | NM | 166 | 316 |
| K (counterface) | 0.92 | - | NM | NM | NM | 0.60 | 0.68 |
| CoF (static) | 0.41 | 0.39 | NM | NM | NM | 0.59 | 0.53 |
| CoF (dynamic) | 0.35 | 0.49 | NM | NM | NM | 0.42 | 0.41 |

| | | | | | | | |
|---|---|---|---|---|---|---|---|
| NM = Not Measured | | | | | | | |

Comparative composition C8 is based on the conventional PTFE formulation. It had good plate-out and delamination properties but is undesirable due to the inclusion of PTFE. Comparative composition C9 is based on a formulation described in US Patent No. 9,181,430. From the results of comparative compositions C10-C12 which include 5-7 wt% UHMWPE as an internal lubricant, it is seen that these compositions exhibited severe plate-out during molding of typical mechanical testing parts.

This example indicates that the stability of UHMWPE in PEEK formulations is dependent on the melt viscosity of the PEEK resin used. PEEK 150 is a low molecular weight/high flow PEEK resin and PEEK 450 is a high molecular weight/lower flow resin. Composition C9 including the lower flow PEEK 450 resin and 4 wt% UHMWPE did not have plate-out or delamination issues, but when the higher flow PEEK 150 resin was blended into the composition the inclusion of UHMWPE resulted in compositions with observed plate-out and failed delamination testing (see comparative compositions C10-C12).

Example compositions Ex22 and Ex23 included r-PEI and the glycidyl ether polyethylene copolymer compatibilizer (Igetabond^{™}) components evaluated in the PEI-based compositions in Example 2; example composition Ex23 included 1 wt% HDPE. Neither composition showed plate-out or delamination during molding. From the results of Example 3, it is seen that new lubricated PEEK flow blends that include a reactive PEI and reactive polyolefin compatibilizer could provide good molding performance across a range of flow blends.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a) from about 10 wt% to about 97 wt% of a first thermoplastic polymer component comprising polyetherimide (PEI), polyaryletherketone (PAEK), or a combination thereof;
b) from about 0.1 wt% to about 10 wt% of a second chemically reactive polyetherimide (r-PEI) component that is different from the first polyetherimide component; and
c) from about 2 wt% to about 10 wt% of a reactive polyolefin compatibilizer component,
wherein the combined weight percent value of all components does not exceed 100 wt%, and all weight percent values are based on the total weight of the composition.

2. The thermoplastic composition according to claim 1, wherein the r-PEI component comprises a polyetherimide backbone end-capped with a reactive group that reacts with an end group of the reactive polyolefin compatibilizer component.

3. The thermoplastic composition according to claim 2, wherein the reactive group that reacts with an end group of the reactive polyolefin compatibilizer component comprises, but is not limited to, an amine, an anhydride, an imide, a benzene, an alcohol, a carboxylic acid, an epoxy, a glycidyl ether, a thiol, a silane, an aldehyde, an aromatic acid, or a combination thereof.

4. The thermoplastic composition according to claim 2 or 3, wherein the r-PEI component comprises an amine reactive group.

5. The thermoplastic composition according to any one of claims 1 to 4, wherein the composition comprises from about 2 wt% to about 5 wt% of the r-PEI component.

6. The thermoplastic composition according to any one of claims 1 to 5, wherein the reactive polyolefin compatibilizer component is functionalized with a reactive group or comprises a surface treatment.

7. The thermoplastic composition according to claim 6, wherein the reactive group comprises glycidyl ether, maleic anhydride, or a combination thereof.

8. The thermoplastic composition according to claim 6 or 7, wherein the reactive polyolefin compatibilizer component comprises a surface treatment and comprises high density polyethylene (HDPE), low density polyethylene (LDPE), linear low density polyethylene (LLDPE), or a combination thereof.

9. The thermoplastic composition according to any one of claims 1 to 8, wherein the polyaryletherketone (PAEK) comprises poly (ether ether ketone) (PEEK).

10. The thermoplastic composition according to any one of claims 1 to 9, wherein a molded sample of the composition has no delamination or plate-out as evaluated according to a visual observation.

11. The thermoplastic composition according to any one of claims 1 to 10, wherein the composition further comprises from greater than 0 wt% to 40 wt% glass fiber.

12. The thermoplastic composition according to any one of claims 1 to 11, wherein the composition further comprises from about 0.1 wt% to about 15 wt% of a mineral filler, a non-reactive polyolefin component, or a combination thereof.

13. The thermoplastic composition according to any one of claims 1 to 12, wherein the composition comprises at least one additional additive, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

14. The thermoplastic composition according to any one of claims 1 to 13, wherein the composition does not comprise polytetrafluoroethylene or ultra-high molecular weight polyethylene.

15. An article comprising the thermoplastic composition according to any one of claims 1 to 14, wherein the article is a molded part, an extruded article, or a film.
